# EUROPEAN PATENT SPECIFICATION

(11) **EP 4 302 353 B1**
(45) Date of publication and mention of the grant of the patent: **18.06.2025**
(21) Application number: 22706427.6
(22) Date of filing: 18.02.2022
(51) Int. Cl.: H01M 10/04, H01M 50/51, H01M 50/514, H01M 50/548, H01M 50/552

(54) **AN ELECTRIC BATTERY CELL UNIT AND AN ELECTRIC BATTERY ARRANGEMENT**
ELEKTRISCHE BATTERIEZELLENEINHEIT UND ELEKTRISCHE BATTERIEANORDNUNG
UNITÉ DE CELLULE DE BATTERIE ÉLECTRIQUE ET AGENCEMENT DE BATTERIE ÉLECTRIQUE

(30) Priority: 04.03.2021 SE 2150246
(43) Date of publication of application: 10.01.2024
(73) Proprietor: Scania CV AB, 151 87 Södertälje (SE)
(72) Inventor: VALLINDER, Michael, 153 60 Mölnbo (SE); RAYMAND, David, 752 21 Uppsala (SE); HAGBERG, Johan, 120 58 Årsta (SE)
(74) Representative: Scania CV AB
(86) International application number: PCT/SE2022/050174
(87) International publication number: WO 2022/186749

(56) References cited:
- EP-A2- 3 739 662
- US-A1- 2004 258 985
- US-A1- 2017 309 884

## Description

### Technical field

Aspects of the present invention relate to an electric battery cell unit comprising a stack of electrodes comprising a first electrode and a second electrode. Further, aspects of the present invention relate to an electric battery arrangement comprising a plurality of electric battery cell units of the above-mentioned sort.

### Background

An electric battery cell can be seen as a container chemically storing energy. The electric battery cells may come in various forms and shapes. The electric battery cells may be connected in series and in parallel, into an electric battery arrangement, which may be called an electric battery pack, in order to attain the desired voltage and energy capacity. A conventional electric battery pack may be the complete enclosure or entity that delivers electric power to a product or equipment, for example an electric vehicle, such as a battery electric vehicle or a hybrid electric vehicle. In general, a conventional electric battery pack includes or contains electric battery cells, a control or management system, which may be called a battery management system (BMS) and may, for example, be implemented partly as software, and often also a cooling and/or heating system. Conventionally, the electric battery cells of an electric battery pack may be arranged in modules to attained serviceable units. A conventional module may be a frame holding a plurality of electric battery cells, and a conventional electric battery pack is assembled by interconnecting the modules.

US 2017309884 describes a battery having a power generation element enclosed by a cover, and an electrode having a connecting surface and a protruding surface opposite the connecting surface. The connecting surface is electrically connected to the power generation element. The protruding surface protrudes from an opening in the cover. The cover have a portion which is joined to at least one of the electrode and the power generation element.

US 2004/258985 describes a battery. Mechanical connecting members are provided on the ends of the battery. The mechanical connecting members are engageable with the mechanical connecting members of another similar battery.

### Summary

The inventors of the present invention have found drawbacks in conventional solutions for arranging and mounting electric battery cells, electric battery modules and electric battery packs. For example, the inventors of the present invention have found that some conventional arrangements or installations of conventional electric battery cells, modules and packs are bulky and may occupy a relatively big space. The fact that arrangements or installations of conventional electric battery cells, modules and packs occupy a large space is problematic if the available space is limited, for example with regard to vehicles.

An object of the invention is to provide a solution which mitigates or solves the drawbacks and problems of conventional solutions.

The above and further objects are solved by the subject matter of the independent claims. Further advantageous embodiments of the invention can be found in the dependent claims.

According to a first aspect of the invention, the above mentioned and other objects are achieved with an electric battery cell according to claim 1.

An advantage of the electric battery cell unit according to the first aspect is that the bulkiness of an arrangement and interconnection of a plurality of electric battery cells, for example into an electric battery arrangement or an electric battery pack, is reduced in relation to conventional solutions which provide a corresponding amount of electric power, since, for example, the plurality of electric battery cells can be mounted and interconnected to one another directly without any intermediate electrical conductors, such as bus bars, or mechanical frames. Thus, since the arrangement of a plurality of electric battery cell units according to the first aspect of the invention is less bulky, it occupies less space in relation to conventional arrangements providing a corresponding amount of electric power. Thus, an advantage of the electric battery cell unit according to the first aspect is that the efficiency of an electric battery arrangement assembled from a plurality of the electric battery cell units according to the first aspect is improved. An advantage of the electric battery cell unit according to the first aspect is that the mounting and interconnection of a plurality of electric battery cell units can be performed without welding as in conventional solutions. Such mounting and interconnection by way of welding require additional space, which by way of the electric battery cell unit according to the first aspect instead is made available for more active electric battery cell material, whereby the electrical performance or capacity of an electric battery arrangement assembled from a plurality of the electric battery cell units is improved compared to conventional arrangements of electric battery cells providing a corresponding amount of electric power. An advantage of the electric battery cell unit according to the first aspect of the invention is that an energy-dense electric battery cell and pack can be provided.

An advantage of the electric battery cell unit according to the first aspect is that a more flexible interconnection and mounting of a plurality of battery cell units into an electric battery arrangement or an electric battery pack is attained. The conventional module, which is a plurality of electric battery cells mounted in a frame, interconnected and grouped into a serviceable unit, can be left out by way of the electric battery cell unit according to the first aspect, since a plurality of the electric battery cell units according to the first aspect assembled and interconnected forms a stand-alone or self-supporting configuration which directly may be formed into an electric battery pack, without the intermediate step of the conventional module.

Further, because of the efficient interconnection and mounting of a plurality of the electric battery cell units, the assembly of an electric battery pack is made more efficient and cost effective. Thus, as a consequence, the overall cost for an electric battery pack may be reduced.

**It** may be defined that each of the first and second terminals is electrically conductive or an electrical conductor, and/or made of an electrically conductive material.

According to an advantageous embodiment of the electric battery cell unit according to the first aspect, the first interface is configured for detachable attachment of the first terminal to a second terminal of another electric battery cell unit,
wherein the second interface is configured for detachable attachment of the second terminal to a first terminal of another electric battery cell unit.

An advantage of this embodiment is that the repairability of an arrangement including a plurality of electric battery cells is enhanced, since a faulty electric battery cell can be easily dismantled and removed from the arrangement by way of the detachable attachments of this embodiment and replaced. This is not the case for conventional solutions which weld the terminals of the electric battery cells to one another, often via a busbar, and glue the electric battery cells to one another to form the conventional module. Thus, no glue or welding is required for the assembly and interconnection of a plurality of the electric battery cell units according to this embodiment because of the detachable attachments. An advantage of this embodiment is that the efficiency of an electric battery arrangement assembled from a plurality of the electric battery cell units is further improved.

According to a further advantageous embodiment of the electric battery cell unit according to the first aspect, the holder is configured to support the stack of electrodes. An advantage of this embodiment is that the stand-alone or self-supporting character of the electric battery cell unit is further enhanced. An advantage of this embodiment is that the assembly of an electric battery pack is made more efficient and cost effective. An advantage of this embodiment is that the efficiency of an electric battery arrangement assembled from a plurality of the electric battery cell units is further improved.

The electric battery cell unit according to the first aspect, comprises the holder with a first end portion and a second end portion,
wherein the first terminal is located at the first end portion, and
wherein the second terminal is located at the second end portion.

An advantage of this feature is that the assembly and interconnection of the electric battery cells into an electric battery arrangement is further improved by positioning the first and second terminals at two different end portions. An advantage of this feature is that the assembly of an electric battery pack is made more efficient and cost effective. An advantage of this feature is that the efficiency of an electric battery arrangement assembled from a plurality of the electric battery cell units is further improved.

According to a yet another advantageous embodiment of the electric battery cell unit according to the first aspect, the first terminal is attached to the first end portion, wherein the second terminal is attached to the second end portion. An advantage of this embodiment is that the stand-alone or self-supporting character of the electric battery cell unit is further enhanced. An advantage of this embodiment is that the assembly of an electric battery pack is made more efficient and cost effective. An advantage of this embodiment is that the efficiency of an electric battery arrangement assembled from a plurality of the electric battery cell units is further improved.

According to still another advantageous embodiment of the electric battery cell unit according to the first aspect, the first end portion is opposite the second end portion. An advantage of this embodiment is that the assembly and interconnection of the electric battery cells into an electric battery arrangement is further improved by positioning the first and second terminals at two opposing end portions. An advantage of this embodiment is that the assembly of an electric battery pack is made more efficient and cost effective. An advantage of this embodiment is that the efficiency of an electric battery arrangement assembled from a plurality of the electric battery cell units is further improved.

According to the invention, the holder has a longitudinal extension extending from the first end portion to the second end portion in a longitudinal direction.

Also according to the invention, the first interface comprises one or more first contact surfaces for contact with a second terminal of another electric battery cell unit, the one or more first contact surfaces being in parallel to the longitudinal direction,
wherein the second interface comprises one or more second contact surfaces for contact with a first terminal of another electric battery cell unit, the one or more second contact surfaces being in parallel to the longitudinal direction.

An advantage of this feature is that the attachment of the electric battery cell units to one another and the interconnection of a plurality of electric battery cells into an electric battery arrangement is further improved. An advantage of this feature is that the assembly of an electric battery pack is made more efficient and cost effective. An advantage of this feature is that the efficiency of an electric battery arrangement assembled from a plurality of the electric battery cell units is further improved. It may be defined that the one or more first contact surfaces is/are configured for electrical contact with the second terminal of another electric battery cell unit. It may be defined that the one or more first contact surfaces is/are configured for mechanical or physical contact with the second terminal of another electric battery cell unit. It may be defined that the one or more second contact surfaces is/are configured for electrical contact with the first terminal of another electric battery cell unit. It may be defined that the one or more second contact surfaces is/are configured for mechanical or physical contact with the first terminal of another electric battery cell unit.

According to the invention, the one or more first contact surfaces comprises/comprise two stops and a sloping surface extending from one of the two stops of the one or more first contact surfaces to the other one of the two stops of the one or more first contact surfaces,
wherein the one or more second contact surfaces comprises/comprise two stops and a sloping surface extending from one of the two stops of the one or more second contact surfaces to the other one of the two stops of the one or more second contact surfaces.

An advantage of this feature is that the attachment of the electric battery cell units to one another and the interconnection of a plurality of electric battery cells into an electric battery arrangement is further improved. An advantage of this feature is that the assembly of an electric battery pack is made more efficient and cost effective. An advantage of this feature is that the efficiency of an electric battery arrangement assembled from a plurality of the electric battery cell units is further improved.

According to a yet another advantageous embodiment of the electric battery cell unit according to the first aspect, the second interface is a mirrored version of the first interface. An advantage of this embodiment is that the assembly and interconnection of a plurality of electric battery cells into an electric battery arrangement is further improved. Since the second interface is a mirrored version of the first interface, an unintentional interconnection of two first terminals and an unintentional interconnection of two second terminals are avoided, since the two first interfaces will not match one another, and the two second interfaces will not match one another. Since the second interface is a mirrored version of the first interface, a poka-yoke character of the first and second terminals, or of the first and second interfaces, is established. An advantage of this embodiment is that the assembly of an electric battery pack is made more efficient and cost effective. An advantage of this embodiment is that the efficiency of an electric battery arrangement assembled from a plurality of the electric battery cell units is further improved. The poka-yoke character may also be described as a mistake-proofing character, or an inadvertent error prevention character.

According to still another advantageous embodiment of the electric battery cell unit according to the first aspect, the first terminal forms a through-hole for receiving an attachment member for the attachment of the first terminal to a second terminal of another electric battery cell unit. An advantage of this embodiment is that a strong bond between the first terminal and a second terminal of another electric battery cell unit is provided, which reduces the electrical losses between the terminals. An advantage of this embodiment is that the attachment of the electric battery cell units to one another and the interconnection of a plurality of electric battery cells into an electric battery arrangement is further improved. An advantage of this embodiment is that the assembly of an electric battery pack is made more efficient and cost effective. An advantage of this embodiment is that the efficiency of an electric battery arrangement assembled from a plurality of the electric battery cell units is further improved. In some embodiments, the attachment member may be at least partly threaded and configured to engage and cooperate with a complementary treaded attachment unit, for example a nut. Further, this embodiment improves the repairability of an arrangement including a plurality of electric battery cells, since a faulty electric battery cell can be easily dismantled and removed from the arrangement. However, it is to be understood that other means of attachment in additional to the through-hole and the attachment member are possible.

According to a further advantageous embodiment of the electric battery cell unit according to the first aspect, the second terminal forms a through-hole for receiving an attachment member for the attachment of the second terminal to a first terminal of another electric battery cell unit. An advantage of this embodiment is that a strong bond between the second terminal and a first terminal of another electric battery cell unit is provided, which reduces the electrical losses between the terminals. An advantage of this embodiment is that the attachment of the electric battery cell units to one another and the interconnection of a plurality of electric battery cells into an electric battery arrangement is further improved. An advantage of this embodiment is that the assembly of an electric battery pack is made more efficient and cost effective. An advantage of this embodiment is that the efficiency of an electric battery arrangement assembled from a plurality of the electric battery cell units is further improved. In some embodiments, the attachment member may be at least partly threaded and configured to engage and cooperate with a complementary treaded attachment unit, for example a nut. Further, this embodiment improves the repairability of an arrangement including a plurality of electric battery cells, since a faulty electric battery cell can be easily dismantled and removed from the arrangement and replaced. However, it is to be understood that other means of attachment in additional to the through-hole and the attachment member are possible.

According to another advantageous embodiment of the electric battery cell unit according to the first aspect, the holder comprises a casing for housing the stack of electrodes. An advantage of this embodiment is that the stand-alone or self-supporting character of the electric battery cell unit is further enhanced. An advantage of this embodiment is that the assembly of an electric battery pack is made more efficient and cost effective. An advantage of this embodiment is that the efficiency of an electric battery arrangement assembled from a plurality of the electric battery cell units is further improved.

According to yet another advantageous embodiment of the electric battery cell unit according to the first aspect, the casing is made of an electrically insulating material. An advantage of this embodiment is that an electrical insulation of the electric battery cell is provided in an efficient manner and that additional electrical insulation arrangements are not needed. An advantage of this embodiment is that the assembly of an electric battery pack is made more efficient and cost effective. An advantage of this embodiment is that the efficiency of an electric battery arrangement assembled from a plurality of the electric battery cell units is further improved.

According to still another advantageous embodiment of the electric battery cell unit according to the first aspect, the casing is made of a thermally conductive material. An advantage of this embodiment is that heat from the stack of electrodes may be conducted away from the electric battery cell unit, thereby providing cooling of the electric battery cell unit. An advantage of this embodiment is that the assembly of an electric battery pack is made more efficient and cost effective. An advantage of this embodiment is that the efficiency of an electric battery arrangement assembled from a plurality of the electric battery cell units is further improved, since, for example, other conventional cooling facilities may be reduced or eliminated.

According to an advantageous embodiment of the electric battery cell unit according to the first aspect, the electric battery cell unit comprises
one or more first electrode tabs electrically connected to the first electrode, and
one or more second electrode tabs electrically connected to the second electrode,
wherein the first terminal is electrically connected to the one or more first electrode tabs, and
wherein the second terminal is electrically connected to the one or more second electrode tabs.

The inventive solution is efficient and useful for electric battery cell units comprising electrode tabs.

According to a further advantageous embodiment of the electric battery cell unit according to the first aspect, the first terminal is directly mechanically connected and directly electrically connected to the one or more first electrode tabs, and
wherein the second terminal is directly mechanically connected and directly electrically connected to the one or more second electrode tabs.

An advantage of this embodiment is that more space is made available for more active electric battery cell material, for example, more electrode material, more electrolyte and/or more separator material, without increasing the overall size of the electric battery cell. For example, the conventional internal busbar connecting electrode tabs to the terminal in a conventional electric battery cell can be excluded. Thus, the electrical performance or capacity of an electric battery cell is enhanced without increasing the overall size of the electric battery cell. An advantage of this embodiment is that the efficiency of an electric battery cell is improved. An advantage of this embodiment is that an energy-dense electric battery cell and pack can be provided.

According to yet another advantageous embodiment of the electric battery cell unit according to the first aspect, the one or more first electrode tabs extends/extend into the first terminal,
wherein the one or more second electrode tabs extends/extend into the second terminal.

An advantage of this embodiment is that further space is made available for more active electric battery cell material, for example, more electrode material, more electrolyte and/or more separator material, without increasing the overall size of the electric battery cell. Thus, the electrical performance or capacity of an electric battery cell is further enhanced without increasing the overall size of the electric battery cell. An advantage of this embodiment is that the efficiency of an electric battery cell is further improved.

According to still another advantageous embodiment of the electric battery cell unit according to the first aspect, the first terminal has an extension extending a first distance in the longitudinal direction,
wherein the first terminal is mechanically connected to the one or more first electrode tabs somewhere along the first distance,
wherein the second terminal has an extension extending a second distance in the longitudinal direction, and
wherein the second terminal is mechanically connected to the one or more second electrode tabs somewhere along the second distance.

An advantage of this embodiment is that a more compact configuration of a terminal and its associated electrode tabs is provided. An advantage of this embodiment is that even more space is made available for more active electric battery cell material, for example, more electrode material, more electrolyte and/or more separator material, without increasing the overall size of the electric battery cell. Thus, the electrical performance or capacity of an electric battery cell is further enhanced without increasing the overall size of the electric battery cell. An advantage of this embodiment is that the efficiency of an electric battery cell is improved.

According to a second aspect of the invention, the above mentioned and other objects are achieved with an electric battery arrangement comprising a plurality of electric battery cell units according to any one of the embodiments disclosed above or below.

It is to be understood that a plurality of electric battery cell units comprises two or more electric battery cell units.

Advantages of the electric battery arrangement according to the second aspect correspond to the above- or below-mentioned advantages of the electric battery cell unit according to the first aspect and its embodiments.

Advantages of the below-mentioned embodiments of the electric battery arrangement according to the second aspect correspond to the above-mentioned advantages of the above-mentioned embodiments of the electric battery cell unit according to the first aspect.

According to an advantageous embodiment of the electric battery arrangement according to the second aspect, the first interfaces of the electric battery cell units of the plurality of electric battery cell units are equal to one another,
wherein the second interfaces of the electric battery cell units of the plurality of electric battery cell units are equal to one another.

An advantage of this embodiment is that the attachment of the electric battery cell units to one another and the interconnection of a plurality of electric battery cells into an electric battery arrangement is further improved. An advantage of this embodiment is that the assembly of an electric battery pack is made more efficient and cost effective. An advantage of this embodiment is that the efficiency of an electric battery arrangement assembled from a plurality of the electric battery cell units is further improved. The wording "equal to one another" is to be understood as substantially equal to one another. Thus, there may be small deviations or differences which have no substantial influence.

According to a further advantageous embodiment of the electric battery arrangement according to the second aspect, the first interface of each electric battery cell unit of the plurality of electric battery cell units is complementary to the second interface of another electric battery cell unit of the plurality of electric battery cell units. An advantage of this embodiment is that the attachment of the electric battery cell units to one another and the interconnection of a plurality of electric battery cells into an electric battery arrangement is further improved. An advantage of this embodiment is that the assembly of an electric battery pack is made more efficient and cost effective. An advantage of this embodiment is that the efficiency of an electric battery arrangement assembled from a plurality of the electric battery cell units is further improved.

According to another advantageous embodiment of the electric battery arrangement according to the second aspect, the first interface of each electric battery cell unit of the plurality of electric battery cell units is configured for non-engagement with the first interface of another electric battery cell unit of the plurality of electric battery cell units. An advantage of this embodiment is that the assembly and interconnection of a plurality of electric battery cells into an electric battery arrangement is further improved. Since the first interface of each electric battery cell unit of the plurality of electric battery cell units is configured for non-engagement with the first interface of another electric battery cell unit, an unintentional interconnection of two first terminals is avoided, since the two first interfaces will not match one another. Since the first interface of each electric battery cell unit of the plurality of electric battery cell units is configured for non-engagement with the first interface of another electric battery cell unit, a poka-yoke character of the first terminals, or of the first interfaces, is established. An advantage of this embodiment is that the assembly of an electric battery pack is made more efficient and cost effective. An advantage of this embodiment is that the efficiency of an electric battery arrangement assembled from a plurality of the electric battery cell units is further improved.

According to yet another advantageous embodiment of the electric battery arrangement according to the second aspect, the second interface of each electric battery cell unit of the plurality of electric battery cell units is configured for non-engagement with the second interface of another electric battery cell unit of the plurality of electric battery cell units. An advantage of this embodiment is that the assembly and interconnection of a plurality of electric battery cells into an electric battery arrangement is further improved. Since the second interface of each electric battery cell unit of the plurality of electric battery cell units is configured for non-engagement with the second interface of another electric battery cell unit, an unintentional interconnection of two second terminals is avoided, since the two second interfaces will not match one another. Since the second interface of each electric battery cell unit of the plurality of electric battery cell units is configured for non-engagement with the second interface of another electric battery cell unit, a poka-yoke character of the second terminals, or of the second interfaces, is established. For some embodiments, a poka-yoke character of the first and second terminals, or of the first and second interfaces, is established. An advantage of this embodiment is that the assembly of an electric battery pack is made more efficient and cost effective. An advantage of this embodiment is that the efficiency of an electric battery arrangement assembled from a plurality of the electric battery cell units is further improved.

According to still another advantageous embodiment of the electric battery arrangement according to the second aspect, the first interface of each electric battery cell unit of the plurality of electric battery cell units is configured to form a scarf joint with the second interface of another electric battery cell unit of the plurality of electric battery cell units. An advantage of this embodiment is that the attachment and mounting of the electric battery cell units to one another and the interconnection of a plurality of electric battery cells into an electric battery arrangement is further improved. An advantage of this embodiment is that a strong bond between the first and second terminals can be attained. An advantage of this embodiment is that the assembly of an electric battery pack is made more efficient and cost effective. An advantage of this embodiment is that the efficiency of an electric battery arrangement assembled from a plurality of the electric battery cell units is further improved.

According to an advantageous embodiment of the electric battery arrangement according to the second aspect, the electric battery arrangement comprises one or more elements for mounting the plurality of electric battery cell units,
wherein the first and second terminals are detachably attachable to the element.

An advantage of this embodiment is that the mounting of the electric battery arrangement to a structure by way of the one or more elements is improved. An advantage of this embodiment is that the mounting of a plurality of rows or series of interconnected, for example in series interconnected, electric battery cell units next to one another, side by side, or in parallel, is facilitated. An advantage of this embodiment is that the assembly of an electric battery pack is made more efficient and cost effective. An advantage of this embodiment is that the efficiency of an electric battery arrangement assembled from a plurality of the electric battery cell units is further improved.

According to an advantageous embodiment of the electric battery arrangement according to the second aspect, the element is made of an electrically insulating material. An advantage of this embodiment is that the mounting of the electric battery arrangement to a structure by way of the one or more elements is improved. An advantage of this embodiment is that the mounting of a plurality of rows or series of interconnected, for example in series interconnected, electric battery cell units next to one another, or in parallel, is further facilitated. An advantage of this embodiment is that the assembly of an electric battery pack is made more efficient and cost effective. An advantage of this embodiment is that the efficiency of an electric battery arrangement assembled from a plurality of the electric battery cell units is further improved.

According to an advantageous embodiment of the electric battery arrangement according to the second aspect, the element is configured to conduct heat away from one or more of the first and second terminals. An advantage of this embodiment is that an efficient cooling of the first and second terminals and indirectly of the stacks of electrodes is provided. For example, other conventional cooling facilities may be reduced or eliminated. An advantage of this embodiment is that the assembly of an electric battery pack is made more efficient and cost effective. An advantage of this embodiment is that the efficiency of an electric battery arrangement assembled from a plurality of the electric battery cell units is further improved. It may be defined that the element is configured to thermally conduct heat away from one or more of the first and second terminals.

According to an advantageous embodiment of the electric battery arrangement according to the second aspect, the element is made of a thermally conductive material. An advantage of this embodiment is that an efficient cooling of the first and second terminals and indirectly of the stacks of electrodes is provided. For example, other conventional cooling facilities may be reduced or eliminated. An advantage of this embodiment is that the assembly of an electric battery pack is made more efficient and cost effective. An advantage of this embodiment is that the efficiency of an electric battery arrangement assembled from a plurality of the electric battery cell units is further improved.

According to a third aspect of the invention, the above mentioned and other objects are achieved with a method according to claim 14.

Advantages of the method according to the third aspect and its embodiments correspond to the above- or below-mentioned advantages of the electric battery cell unit according to the first aspect and its embodiments and to the above- or below-mentioned advantages of the electric battery arrangement according to the second aspect and its embodiments.

According to a fourth aspect of the invention, the above mentioned and other objects are achieved with a vehicle comprising one or more of the group of:
- an electric battery cell unit according to any one of the embodiments disclosed above or below; and
- an electric battery arrangement according to any one of the embodiments disclosed above or below.

The advantages of the vehicle according to the fourth aspect and its embodiments correspond to the above- or below-mentioned advantages of the electric battery cell unit according to the first aspect and its embodiments and to the above- or below-mentioned advantages of the electric battery arrangement according to the second aspect and its embodiments.

The vehicle may be a wheeled vehicle, i.e. a vehicle having wheels. The vehicle may for example be a bus, a tractor vehicle, a heavy vehicle, a truck, or a car. The tractor vehicle, and/or the truck, may, or may be configured to, haul, or pull, a trailer. However, other types of vehicles are possible. The vehicle may be referred to as a motor vehicle. The vehicle may be an electric vehicle, EV, for example a hybrid vehicle or a hybrid electric vehicle, HEV, or a battery electric vehicle, BEV. Thus, a hybrid electric vehicle, HEV, and a battery electric vehicle, BEV, are versions, or examples, of an electric vehicle, EV. The EV may comprise one or more electric motors or electrical machines. The vehicle may comprise a combustion engine. For some embodiments, the vehicle may include only a combustion engine for the propulsion of the vehicle.

The vehicle may comprise a powertrain. The powertrain may be configured in accordance with any one of the embodiments disclosed above or below. The powertrain of the vehicle may comprise one or more of the group of: a combustion engine; an electric battery cell unit; an electric battery arrangement; and an electric battery pack.

The above-mentioned features and embodiments of the electric battery cell unit, the electric battery arrangement, the method and the vehicle, respectively, may be combined in various possible ways providing further advantageous embodiments.

Further advantageous embodiments of the electric battery cell unit, the electric battery arrangement, the method and the vehicle according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic perspective view of an embodiment of the electric battery cell unit according to the first aspect of the invention;
- Figure 2: is a schematic side view of the electric battery cell unit of figure 1;
- Figure 3: is a schematic front view of the electric battery cell unit of figure 1;
- Figure 4: is a schematic back view of the electric battery cell unit of figure 1;
- Figure 5: is a schematic top view of the electric battery cell unit of figure 1;
- Figure 6: is an enlargement of figure 3;
- Figure 7: is an enlargement of figure 4;
- Figure 8: schematically illustrates a cross-section of the electric battery cell unit along *A-A* in figure 5;
- Figure 9: schematically illustrates a cross-section of the electric battery cell unit along *B-B* in figure 2;
- Figure 10: is a schematic perspective view of a first embodiment of the electric battery arrangement according to the second aspect of the invention;
- Figure 11: is a schematic perspective view of an embodiment of the electric battery cell unit according to the first aspect of the invention attached to two elements;
- Figure 12: a schematic flow chart illustrating aspects of embodiments of the method according to the third aspect of the invention;
- Figure 13: is a schematic diagram illustrating aspects of a second embodiment of the electric battery arrangement according to the second aspect;
- Figure 14: is a schematic diagram illustrating further aspects of the electric battery arrangement of figure 13; and
- Figure 15: is a schematic side view of an embodiment of the vehicle according to the fourth aspect.

### Detailed Description

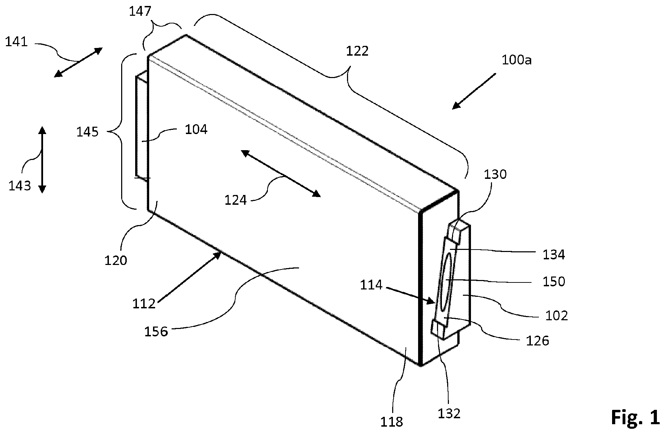

With reference to figure 1, an embodiment of the electric battery cell unit 100a according to the first aspect of the invention is schematically illustrated. The electric battery cell unit 100a includes a first terminal 102 and a second terminal 104. Each one 102, 104 of the first and second terminals 102, 104 may be described as electrically conductive or as an electrical conductor. Each one 102, 104 of the first and second terminals 102, 104 may at least partly be made of an electrically conductive material. Each one 102, 104 of the first and second terminals 102, 104 may be made of an electrically conductive material. Each one 102, 104 of the first and second terminals 102, 104 may be made of a material comprising a metal or a metal alloy. However, other materials are possible.

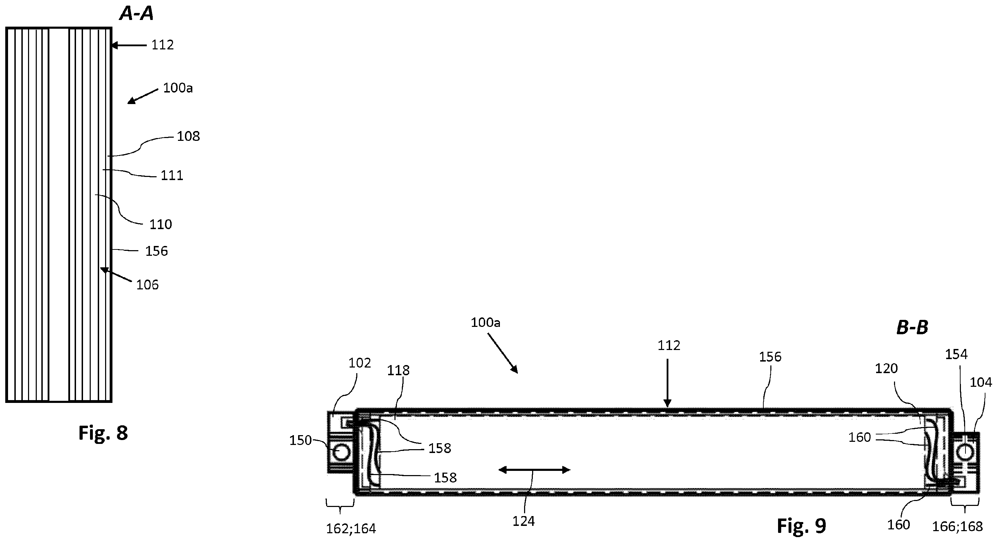

With reference to figure 8, the electric battery cell unit 100a includes a stack of electrodes 106. The stack of electrodes 106 includes a first electrode 108 and a second electrode 110. The stack of electrodes 106 may comprise an electrolyte. The stack of electrodes 106 may comprise a separator 111 for separating the first and second electrodes 108, 110. One or more of the first electrode 108, the second electrode 110 and the separator 111 may be formed as a sheet. The one or more sheets may be rolled to form a roll. The stack of electrodes 106 may comprise a jelly roll stack comprising the first electrode 108 and the second electrode 110. The jelly roll stack may include the electrolyte and the separator 111. However, it is to be understood that other types, or other configurations, of stacks of electrodes in addition to the jelly roll stack are possible. In general, it is to be understood that an electrode is an electrical conductor used to make contact with a nonmetallic part of a circuit, for example an electrolyte, a vacuum, air, or a semiconductor. The electrical battery cell unit 100a may comprise a lead-acid battery cell, a Li-ion battery cell, or a NiMH battery cell, but is not limited thereto.

With reference to figure 8, for some embodiments, one 108, 110 of the first and second electrodes 108, 110 may be described as a positive electrode 108, 110 while the other one 108, 110 of the first and second electrodes 108, 110 may be described as a positive electrode 108, 110. For some embodiments, one 108, 110 of the first and second electrodes 108, 110 may be described as an anode 108, 110 while the other one 108, 110 of the first and second electrodes 108, 110 may be described as a cathode 108, 110.

With reference to figure 1 and 8, the electric battery cell unit 100a includes a holder 112 for holding the stack of electrodes 106. In the embodiments shown in figures 1 to 11, the holder 112 holds the stack of electrodes 106. The first and second terminals 102, 104 are attached to the holder 112. The first terminal 102 is electrically connected to the first electrode 108. The first terminal 102 may also be described to be mechanically connected to the first electrode 108. The second terminal 104 is electrically connected to the second electrode 110. The second terminal 104 may also be described to be mechanically connected to the second electrode 110. In the context of this disclosure, when two items are described as electrically connected, it is to be understood that these two items may be directly electrically connected or indirectly electrically connected, for example via one or more intermediate conductors.

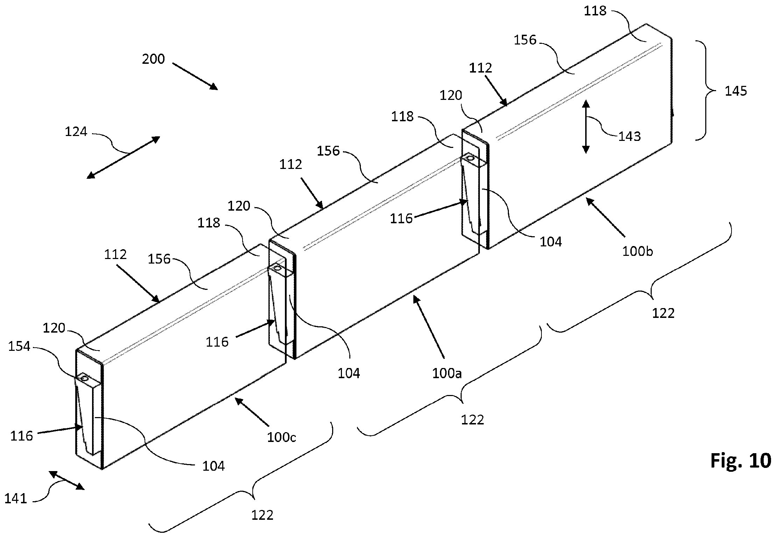

With reference to figures 1 to 7 and 10, the first terminal 102 includes a first interface 114 for attachment and electrical connection of the first terminal 102 to a second terminal 104 of another electric battery cell unit 100b (see figure 10). The second terminal 104 includes a second interface 116 for attachment and electrical connection of the second terminal 104 to a first terminal 102 of another electric battery cell unit 100c (see figure 10).

For illustrative purposes, in figure 10 only the second terminals 104 of the electric battery cell units 100a, 100b, 100c are shown while the first terminals 102 of the electric battery cell units 100a, 100b, 100c are not shown. However, it is to be understood that that the electric battery cell units 100a, 100b, 100c in figure 10 also are equipped with the first terminals 102 although not illustrated, the first terminal 102 being, for example, illustrated in figure 1. The second terminals 104 of the two electric battery cell units 100a, 100b to the right in figure 10 would be in engagement with the first terminals 102 of the two electric battery cell units 100a, 100c to the left in figure 10 when the electric battery cell units 100a, 100b, 100c are positioned in a row, for example aligned, as illustrated in figure 10. Further, for illustrative purposes, the two electric battery cell units 100a, 100c to the left in figure 10 are somewhat transparent.

With reference to figures 1 to 7 and 10, for some embodiments, the first interface 114 is configured for detachable attachment of the first terminal 102 to a second terminal 104 of another electric battery cell unit 100b (see figure 10). For some embodiments, the second interface 116 is configured for detachable attachment of the second terminal 104 to a first terminal 102 of another electric battery cell unit 100c (see figure 10).

With reference to figures 1 to 7 and 10, the holder 112 may have a first end portion 118 and a second end portion 120. The first terminal 102 may be located, or situated, at the first end portion 118 while the second terminal 104 may be located, or situated, at the second end portion 120. For some embodiments, the first terminal 102 is attached to the first end portion 118 while the second terminal 104 is attached to the second end portion 120. The first end portion 118 may be opposite, or may oppose, the second end portion 120. The holder 112 may be described to have a longitudinal extension 122 which extends from the first end portion 118 to the second end portion 120 in a longitudinal direction 124.

With reference to figures 1 to 7 and 10, for some embodiments, the first interface 114 includes one or more first contact surfaces 126 for contact with a second terminal 104 of another electric battery cell unit 100b. The one or more first contact surfaces 126 is/are in parallel to the longitudinal direction 124. For some embodiments, the second interface 116 includes one or more second contact surfaces 128 for contact with a first terminal 102 of another electric battery cell unit 100c. The one or more second contact surfaces 128 is/are in parallel to the longitudinal direction 124. For some embodiments, it may be defined that the one or more first contact surfaces 126 is/are configured for electrical contact with the second terminal 104 of another electric battery cell unit 100b. For some embodiments, it may be defined that the one or more first contact surfaces 126 is/are configured for mechanical or physical contact with the second terminal 104 of another electric battery cell unit 100b. For some embodiments, it may be defined that the one or more second contact surfaces 128 is/are configured for electrical contact with the first terminal 102 of another electric battery cell unit 100c. For some embodiments, it may be defined that the one or more second contact surfaces 128 is/are configured for mechanical or physical contact with the first terminal 102 of another electric battery cell unit 100c.

With reference to figures 1 to 7 and 10, the one or more first contact surfaces 126 may include two stops 130, 132 and a sloping surface 134 extending from one 130, 132 of the two stops 130, 132 of the one or more first contact surfaces 126 to the other one 130, 132 of the two stops 130, 132 of the one or more first contact surfaces 126. The one or more second contact surfaces 128 may include two stops 136, 138 and a sloping surface 140 extending from one 136, 138 of the two stops 136, 138 of the one or more second contact surfaces 128 to the other one 136, 138 of the two stops 136, 138 of the one or more second contact surfaces 128.

With reference to figures 1, 6 and 7, the holder 112, or the electric battery cell unit 100a, may be described to have a height 145 extending in a first direction 143 which is transverse to the longitudinal direction 124. The holder 112, or the electric battery cell unit 100a, may be described to have a width 147 extending in a second direction 141 which is transverse to the longitudinal direction 124 and to the first direction 143.

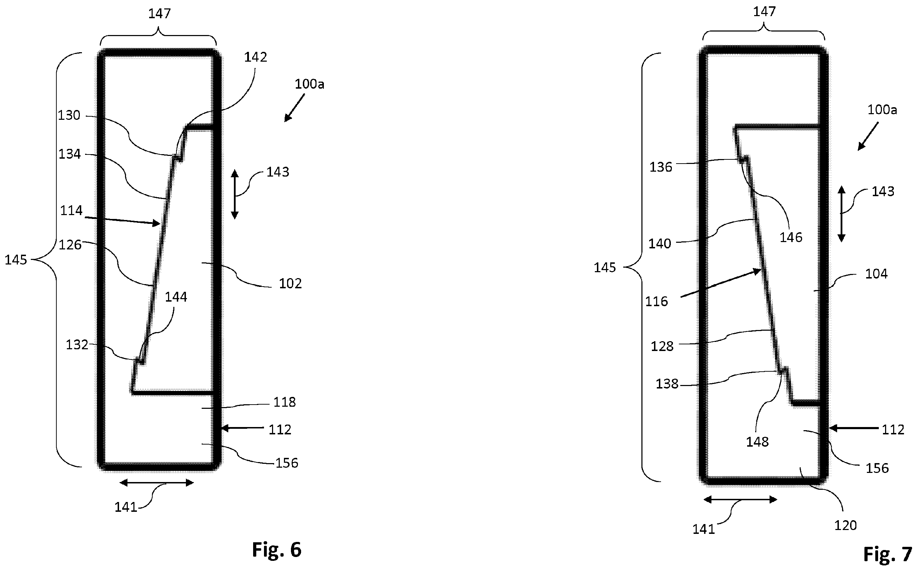

With reference to figure 6, one 130, 132 of the two stops 130, 132 of the one or more first contact surfaces 126 may be described to be displaced in relation to, or from, the other one 130, 132 of the two stops 130, 132 of the one or more first contact surfaces 126 in the second direction 141. Further, one 130, 132 of the two stops 130, 132 of the one or more first contact surfaces 126 may be described to be displaced in relation to, or from, the other one 130, 132 of the two stops 130, 132 of the one or more first contact surfaces 126 in the first direction 143. Each one 130, 132 of the two stops 130, 132 of the one or more first contact surfaces 126 may include or present a transverse surface 142, 144 which is transverse to the sloping surface 134 of the one or more first contact surfaces 126. The angle between each one 142, 144 of the transverse surfaces 142, 144 and the sloping surface 134 of the one or more first contact surfaces 126 may be selected such that the first terminal 102 is guided in a direction toward and/or forced against a second terminal 104 of another electric battery cell unit 100b in a direction transverse to the direction of the sloping surface 134 of the one or more first contact surfaces 126 when the first interface 114 is in engagement with the second terminal 104 of another electric battery cell unit 100b and when the first terminal 102 is moved, or slid, in the direction of the sloping surface 134 of the one or more first contact surfaces 126.

With reference to figure 7, one 136, 138 of the two stops 136, 138 of the one or more second contact surfaces 128 may be described to be displaced in relation to, or from, the other one 136, 138 of the two stops 136, 138 of the one or more second contact surfaces 128 in the second direction 141. Further, one 136, 138 of the two stops 136, 138 of the one or more second contact surfaces 128 may be described to be displaced in relation to, or from, the other one 136, 138 of the two stops 136, 138 of the one or more second contact surfaces 128 in the first direction 143. Each one 136, 138 of the two stops 136, 138 of the one or more second contact surfaces 128 may include or present a transverse surface 146, 148 which is transverse to the sloping surface 140 of the one or more second contact surfaces 128. The angle between each one 146, 148 of the transverse surfaces 146, 148 and the sloping surface 140 of the one or more second contact surfaces 128 may be selected such that the second terminal 104 is guided in a direction toward and/or forced against a first terminal 102 of another electric battery cell unit 100c in a direction transverse to the direction of the sloping surface 140 of the one or more second contact surfaces 128 when the second interface 116 is in engagement with the first terminal 102 of another electric battery cell unit 100c and when the second terminal 104 is moved, or slid, in the direction of the sloping surface 140 of the one or more second contact surfaces 128.

With reference to figure 6 and 7, the second interface 116 may be described as a mirrored version of the first interface 114.

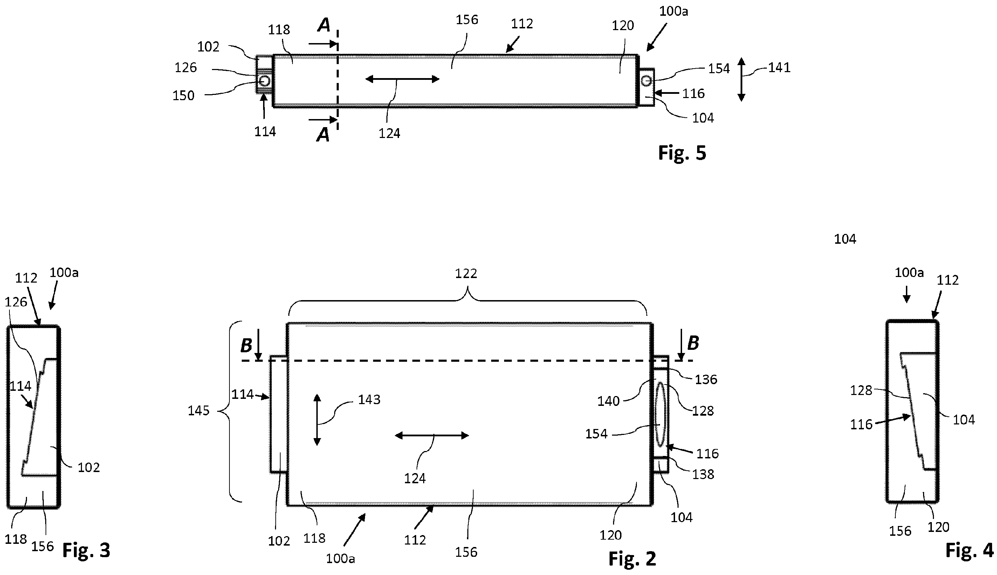

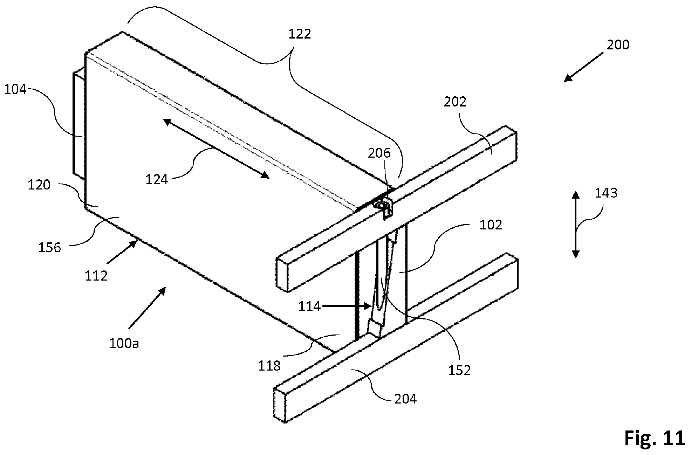

With reference to figures 1, 5 and 11, the first terminal 102 may form a through-hole 150 for receiving an attachment member 152 (see figure 11) for the attachment of the first terminal 102 to a second terminal 104 of another electric battery cell unit 100b. With reference to figures 2, 5 and 10, the second terminal 104 may form a through-hole 154 for receiving an attachment member 152 for the attachment of the second terminal 104 to a first terminal 102 of another electric battery cell unit 100c. In some embodiments, the attachment member 152 may comprise, or form, a shaft or pin. In some embodiments, the attachment member 152 may be at least partly threaded and configured to engage and cooperate with a complementary treaded attachment unit, for example a nut. However, other attachments or means of attachment for the attachment member 152 are possible. In other embodiments, the battery cell unit 100a, or each of the first and second interfaces 114, 116, may include other attachments for the attachment of the first and second terminals 102, 104, for example, but not limited there to, one or more of the group of: a thread attachment, for example including a screw and a complementary bore; a friction attachment; a positive locking attachment; a clamp attachment, for example including one or more clamps; and a bayonet attachment.

With reference to figures 1, 5 and 11, for example, the through-holes 150, 154 and attachment members 152 may provide for a detachable attachment of the first terminal 102 to a second terminal 104 of another electric battery cell unit 100b (see figure 10) and for a detachable attachment of the second terminal 104 to a first terminal 102 of another electric battery cell unit 100c (see figure 10). It may be defined that first interface 114 comprises the through-hole 150 formed by the first terminal 102. It may be defined that second interface 116 comprises the through-hole 154 formed by the second terminal 104. Each of the through-holes 150, 154, and/or the central axis of each of the through-holes 150, 154, may extend in a direction transverse to the longitudinal direction 124, for example in the first direction 143. However, in other embodiments, each of the through-holes 150, 154, and/or the central axis of each of the through-holes 150, 154, may extend in other directions, for example in the second direction 141.

With reference to figure 1 and 8, it may be defined that the holder 112 is configured to support the stack of electrodes 106. The holder 112 may be described as self-supporting. The term "self-supporting" in this context means or implies that the holder 112 is configured to support at least its own weight, or configured to support or maintain itself, such as maintain its own shape, without the aid of other members or means. It may be defined that the holder 112 is rigid or inflexible enough to maintain its own shape or to support at least its own weight.

With reference to figures 1 to 11, the holder 112 may comprise a casing 156, or a can, or a housing, for housing the stack of electrodes 106. In the embodiments shown in figures 1 to 11, the casing 156 houses the stack of electrodes 106. The casing 156 may have many different shapes and may for example be shaped as parallelepiped, for example as a cuboid, such as a rectangular cuboid. However, many other shapes of the casing 156 are possible. For example, the casing 156 may be cylindrical, such as circular cylindrical. For some embodiments, the casing 156 is made of an electrically insulating material, for example a polymer or a polymer composite. However, other electrically insulating materials are possible. For some embodiments, the casing 156 is made of a thermally conductive material. The above-mentioned electrically insulating material may be a thermally conductive material, for example a material comprising silicon, or aluminium, or a material comprising a polymer mixed with carbon fibers. The casing 156 may be rigid. However, in some embodiments, the holder 112 may comprise a pouch, which may be flexible, holding the stack of electrodes 106.

With reference to figure 9, for some embodiments, the electric battery cell unit 100a may comprise one or more first electrode tabs 158 electrically connected to the first electrode 108. For some embodiments, the electric battery cell unit 100a may comprise one or more second electrode tabs 160 electrically connected to the second electrode 110. When the one or more first electrode tabs 158 and the one or more second electrode tabs 160 are present, the first terminal 102 may be electrically connected to the one or more first electrode tabs 158 while the second terminal 104 may be electrically connected to the one or more second electrode tabs 160. However, for some embodiments, the electric battery cell unit may be free of any electrode tab, i.e. the electrode tabs 158, 160 may be excluded.

With reference to figure 9, the first terminal 102 may be directly mechanically connected, or directly attached, and directly electrically connected to the one or more first electrode tabs 158. The second terminal 104 may be directly mechanically connected, or directly attached, and directly electrically connected to the one or more second electrode tabs 160. The one or more first electrode tabs 158 may extend into the first terminal 102 while the one or more second electrode tabs 160 may extend into the second terminal 104.

With reference to figure 9, in the shown embodiments, the first terminal 102 has an extension 162 extending a first distance 164 in the longitudinal direction 124. The first terminal 102 may be mechanically connected to the one or more first electrode tabs 158 somewhere along the first distance 164. In the shown embodiments, the second terminal 104 has an extension 166 extending a second distance 168 in the longitudinal direction 124. The second terminal 104 may be mechanically connected to the one or more second electrode tabs 160 somewhere along the second distance 168.

With reference to figure 10, according to the second aspect of the invention, aspects of an embodiment of the electric battery arrangement 200 including a plurality of electric battery cell units 100a, 100b, 100c, i.e. two or more electric battery cell units 100a, 100b, 100c, according to any one of the embodiments disclose above or below are schematically illustrated. As mentioned above, for illustrative purposes, in figure 10 only the second terminals 104 of the electric battery cell units 100a, 100b, 100c are shown while the first terminals 102 of the electric battery cell units 100a, 100b, 100c are not shown. However, it is to be understood that that the electric battery cell units 100a, 100b, 100c in figure 10 also are equipped with the first terminals 102 although not illustrated. Each first terminal 102 may, for example, be configured as illustrated in figure 1.

With reference to figure 10, some or all of the electric battery cell units 100a, 100b, 100c of the plurality of electric battery cell units 100a, 100b, 100c may be electrically interconnected, for example in series and/or in parallel, via the first and second terminals 114, 116. In figure 10, three electric battery cell units 100a, 100b, 100c are illustrated as electrically connected in series in a row. Some or all of the electric battery cell units 100a, 100b, 100c of the plurality of electric battery cell units 100a, 100b, 100c may be attached to one another via the first and second terminals 102, 104, and/or via the first and second interfaces 114, 116.

In the shown embodiments, the first interfaces 114 of the electric battery cell units 100a, 100b, 100c of the plurality of electric battery cell units 100a, 100b, 100c are equal to one another. In the shown embodiments, the second interfaces 116 of the electric battery cell units 100a, 100b, 100c of the plurality of electric battery cell units 100a, 100b, 100c are equal to one another. More specifically, in the shown embodiments, the first terminals 102 of the electric battery cell units 100a, 100b, 100c of the plurality of electric battery cell units 100a, 100b, 100c are equal to one another while the second terminals 104 of the electric battery cell units 100a, 100b, 100c of the plurality of electric battery cell units 100a, 100b, 100c are equal to one another. The wording "equal to one another" is to be understood as substantially equal to one another. Thus, there may be small deviations or differences which have no substantial influence.

With reference to figures 6, 7 and 10, in the shown embodiments, the first interface 114 of each electric battery cell unit 100a, 100b, 100c of the plurality of electric battery cell units 100a, 100b, 100c is complementary to the second interface 116 of another electric battery cell unit 100a, 100b, 100c of the plurality of electric battery cell units 100a, 100b, 100c.

With reference to figures 6, 7 and 10, in the shown embodiments, the first interface 114 of each electric battery cell unit 100a, 100b, 100c of the plurality of electric battery cell units 100a, 100b, 100c is configured for non-engagement with the first interface 114 of another electric battery cell unit 100a, 100b, 100c of the plurality of electric battery cell units 100a, 100b, 100c. Since the first interface 114 of each electric battery cell unit 100a, 100b, 100c of the plurality of electric battery cell units 100a, 100b, 100c is configured for non-engagement with the first interface 114 of another electric battery cell unit 100a, 100b, 100c, a poka-yoke character of the first terminals 102, or of the first interfaces 114, is established. The poka-yoke character may also be described as a mistake-proofing character, or an inadvertent error prevention character.

With reference to figures 6, 7 and 10, in the shown embodiments, the second interface 116 of each electric battery cell unit 100a, 100b, 100c of the plurality of electric battery cell units 100a, 100b, 100c is configured for non-engagement with the second interface 116 of another electric battery cell unit 100a, 100b, 100c of the plurality of electric battery cell units 100a, 100b, 100c. Since the second interface 116 of each electric battery cell unit 100a, 100b, 100c of the plurality of electric battery cell units 100a, 100b, 100c is configured for non-engagement with the second interface 116 of another electric battery cell unit 100a, 100b, 100c, a poka-yoke character of the second terminals 104, or of the second interfaces 116, is also established. For some embodiments, a poka-yoke character of both the first and second terminals 102, 104, or of both the first and second interfaces 114, 116, is established.

With reference to figures 6, 7 and 10, for some embodiments, the first interface 114 of each electric battery cell unit 100a, 100b, 100c of the plurality of electric battery cell units 100a, 100b, 100c is configured to form a scarf joint with the second interface 116 of another electric battery cell unit 100a, 100b, 100c of the plurality of electric battery cell units 100a, 100b, 100c.

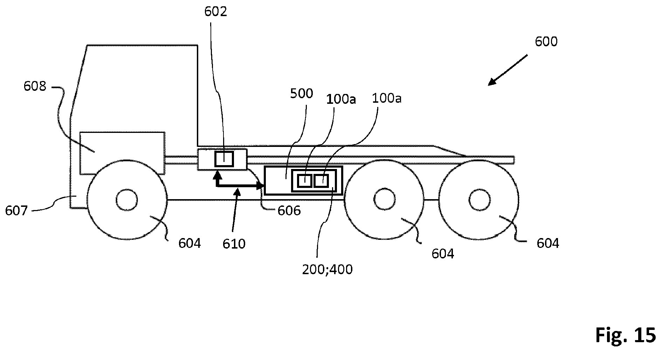

With reference to figures 10 and 11, for some embodiments, the electric battery arrangement 200 may comprise one or more elements 202, 204 for mounting the plurality of electric battery cell units 100a, 100b, 100c, for example to a structure, such as a vehicle 600 (see figure 15), for example a frame or a chassis 607 of a vehicle 600. However, the one or more elements 202, 204 may be used to mount the plurality of electric battery cell units 100a, 100b, 100c to any other structure. For embodiments including the one or more elements 202, 204, the first and second terminals 102, 104 are detachably attachable to the element 202, 204, for example by way of the above-mentioned and the through-holes 150, 154 and attachment member 152 and a complementary through-hole 206 formed by the element 202, 204. The one or more elements 202, 204 may be configured for the mounting of a plurality of electric battery cell units 100a, 100b, 100c, or a plurality of rows of electric battery cell units 100a, 100b, 100c, side by side. Each one of the one or more elements 202, 204 may form a plurality of complementary through-holes 206.

With reference to figures 10 and 11, the element 202, 204 may be made of an electrically insulating material, for example a polymer or a polymer composite. However, other electrically insulating materials are possible. The element 202, 204 may be made of a thermally conductive material. The electrically insulating material of the element 202, 204 may, at the same time, be a thermally conductive material, and may, for example, comprise a material comprising silicon, or aluminium, or a material comprising a polymer mixed with carbon fibers. It may be defined that the element 202, 204 is configured to conduct, for example thermally conduct, heat away from one or more of the first and second terminals 102, 104, for example by way of a coolant or a cooling agent. By way of the one or more elements 202, 204, cooling of the first and/or second terminals and indirectly of the stack of electrodes 106 or the electric battery cell unit 100a, 100b, 100c may be provided in an efficient manner.

With reference to figures 10 and 11, the one or more elements 202, 204 may include, for example enclose, one or more signal lines, or cables, for example one or more low voltage lines, for example for communication and/or control.

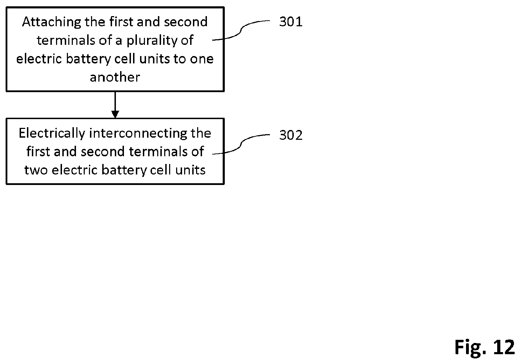

With reference to figure 12, aspects of embodiments of the method for electrically interconnecting a plurality of electric battery cell units 100a, 100b, 100c according to the third aspect are schematically illustrated, wherein each electric battery cell unit 100a, 100b, 100c of the plurality of electric battery cell units 100a, 100b, 100c includes
a stack of electrodes 106 comprising a first electrode 108 and a second electrode 110,
a first terminal 102,
a second terminal 104, and
a holder 112 for holding the stack of electrodes 106,
wherein the first terminal 102 is electrically connected to the first electrode 108,
wherein the second terminal 104 is electrically connected to the second electrode 110,
wherein the first and second terminals 102, 104 are attached to the holder 112,
wherein the first terminal 102 comprises a first interface 114 for attachment and electrical connection of the first terminal 102 to a second terminal 104 of another electric battery cell unit 100a, 100b, 100c, and
wherein the second terminal 104 comprises a second interface 116 for attachment and electrical connection of the second terminal 104 to a first terminal 102 of another electric battery cell unit 100a, 100b, 100c,
wherein the method comprises:
   - attaching 301 a first terminal 102 of one 100a, 100b, 100c of the electric battery cell units 100a, 100b, 100c of the plurality of electric battery cell units 100a, 100b, 100c to a second terminal 104 of another one 100a, 100b, 100c of the electric battery cell units 100a, 100b, 100c of the plurality of electric battery cell units 100a, 100b, 100c via the first and second interfaces 114, 116 to electrically interconnect 302 the first and second terminals 102, 104 of the two electric battery cell units 100a, 100b, 100c of the plurality of electric battery cell units 100a, 100b, 100c.

For some embodiments, the step of attaching 301 the first and second terminals 102, 104 may, for example, be performed by way of the above-mentioned through-holes 150, 154 and attachment member 152, or by way of any one of the other types of attachments mentioned above.

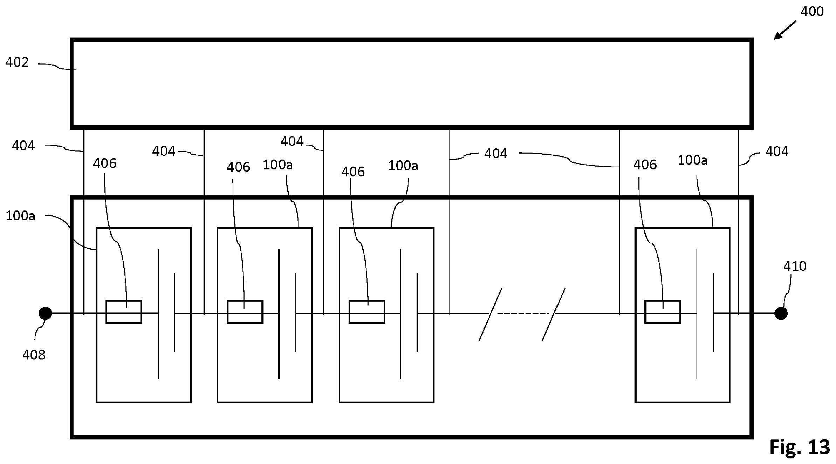

Figure 13 schematically illustrates, in the form of a schematic circuit diagram, aspects of a second embodiment of the electric battery arrangement 400 according to the second aspect which includes two or more electric battery cell units 100a according to any one of the embodiments disclosed above. The illustrated electric battery arrangement 400, or the electric battery arrangement 200 of figure 10, may be carried by, or included in, a vehicle 600 and/or included in a powertrain 606 of the vehicle 600 (see figure 15).

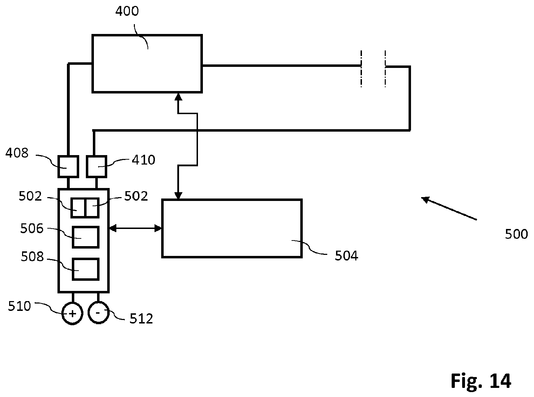

With reference to figure 13, each electric battery cell unit 100a can be seen as a container chemically storing energy and may be a rechargeable electric battery cell unit 100a. The electric battery cell units 100a may be electrically connected in series and/or in parallel, into the electric battery arrangement 400, which also may be referred to as, or form, an electric battery pack 500 (see figure 14), in order to attain the desired voltage and energy capacity. In the shown embodiment, the electric battery cell units 100a are electrically connected in series with one another. The electric battery arrangement 400, or pack 500, may form the complete enclosure that delivers electric power to a product or equipment, for example an electric vehicle, EV.

With reference to figure 13, the electric battery arrangement 400 may include a cell controller 402 which may be electrically connected in parallel with each electric battery cell unit 100a by way of a plurality of electrical lines 404, for example electrical wires. For example, in some embodiments, said plurality of electrical lines 404 may be included in, or enclosed by, the one or more elements 202, 204 disclosed above. The cell controller 402 may be called a cell module controller (CMC). Each electric battery cell unit 100a may include a cell fuse 406 for short-circuit protection. However, in some arrangements, the cell fuse 406 may be excluded from the electric battery cell unit 100a.

With reference to figure 13, for some embodiments, the electrical battery arrangement 400 has two outputs 408, 410 for connecting the electrical battery arrangement 400 to one or more electrical loads, for example via a vehicle electrical system 610 (see figure 15) and/or electrical conductors. The two outputs 408, 410 may be referred to as electrical contacts. One 408, 410 of the two outputs 408, 410 may be a negative terminal having a negative pole, while the other one 408, 410 of the two outputs 408, 410 may be a positive terminal having a positive pole.

The electrical battery arrangement 400 illustrated in figure 13 may be included in, or form, an electric battery pack 500 schematically illustrated in figure 14, for example suitable for a vehicle 600 (see figure 15). With reference to figure 14, the electric battery pack 500 may comprise the electrical battery arrangement 400. The electric battery pack 500 may have two end terminals 510, 512 (DC positive and DC negative) for electric power, or current, transfer, to be connected to one or more electrical loads, for example via a vehicle electrical system 610 (see figure 15) and/or electrical conductors. The above-mentioned two outputs 408, 410 may be connected to the two end terminals 510, 512 of the electric battery pack 500.

With reference to figure 14, the electric battery pack 500 may comprise one or more internal contactors 502 switchable between an open position, or a non-conducting state, and a closed position, or a conducting state. When the internal contactor 502 is in the closed position, the internal contactor 502 is configured to conduct an electric current or allow an electric current to pass. When the internal contactor 502 is in the open position, the internal contactor 502 is configured to interrupt an electric current, or an electrical conductivity, such that no electric current can pass through the internal contactor 502. The electric battery pack 500 may include a battery management system 504, BMS. The battery management system 504, BMS, may be described as a control system for controlling the electric battery pack 500. The one or more internal contactors 502 of the electric battery pack 500 may be controlled by the battery management system 504. The battery management system 504 may be connected to and communicate with the above-mentioned cell module controller, CMC, 402 of the electric battery arrangement 400 shown in figure 13.

With reference to figure 14, the electric battery pack 500 may include a pre-charge contactor 506 switchable between an open position, or a non-conducting state, and a closed position, or a conducting state. In general, when the battery management system 504 is activated or active, a pre-charging of an electrical system (such as a vehicle electrical system) may be performed before all the internal contactors 502 are closed, for example with the aid of the pre-charge contactor 506. Pre-charging of a high voltage direct current system is known to the person skilled in the art and is thus not discussed in further detail.

With reference to figure 14, the electric battery pack 500 may comprises an electric battery pack fuse 508, which, for example, may be a melt fuse, or a pyrotechnic fuse (or pyro fuse), for protection. It is to be understood that the electric battery pack 500 may include additional electrical components or equipment known to the person skilled in the art, such as sensors, but these are left out for illustrative purposes.

With reference to figure 15, an embodiment of the vehicle 600 according the fourth aspect of the invention is schematically illustrated. The vehicle 600 includes one or more of the group of: an electric battery cell unit 100a according to any one of the embodiments disclosed above or below; and an electric battery arrangement 200, 400 according to any one of the embodiments disclosed above or below.

With reference to figure 15, the vehicle 600 is illustrated as a tractor vehicle. However, in other embodiments, the vehicle 600 may, for example, be a bus, a truck, a heavy truck or a car. Other types of vehicles are also possible. The vehicle 600 may be an electric vehicle, EV, for example a hybrid vehicle or a hybrid electric vehicle, HEV, or a battery electric vehicle, BEV.

With reference to figure 15, the vehicle 600 may be a wheeled vehicle, i.e. a vehicle 600 having wheels 604. Only the wheels 604 on the left-hand side of the vehicle 600 are visible in figure 15. It is to be understood that the vehicle 600 may have fewer or more wheels than what is shown in figure 15. The vehicle 600 may comprise a powertrain 606, for example configured for one of an EV, HEV and BEV. The vehicle 600 may be configured to hold or carry, or may include, one or more electric battery cell units 100a according to any one of the embodiments disclosed above, an electrical battery arrangement 200; 400 as illustrated in figures 10 and 13 and/or an electric battery pack 500 as illustrated in figure 14. The electrical battery arrangement 200; 400 and/or the electric battery pack 500 may, for example, be attachable to a chassis 607 of the vehicle 600. It is to be understood that the vehicle 600 may include further unites, components, such as electrical and/or mechanical components, one or more electric motors 602, a combustion engine 608 and other devices required for a vehicle 600, such as for an EV, HEV or BEV.

With reference to figure 15, it may be defined that the powertrain 606 and/or the one or more electric motors 602 is/are configured to propel, or drive, the vehicle 600. It may be defined that the powertrain 606 includes the one or more electric battery cell units 100a, the electrical battery arrangement 200; 400 and/or the electric battery pack 500.

With reference to figure 15, the vehicle 600 may include a vehicle electrical system 610. It may be defined that the vehicle electrical system 610 is configured for direct current. It may be defined that vehicle electrical system 610 is a vehicle high voltage system 610. It may be defined that the vehicle high voltage system 610 is configured for a high voltage, such as a voltage above 60 V, for example above 400 V, or above 450 V, such as above 650 V. For example, the vehicle high voltage system 610 may be configured for a voltage up to 1500 V and/or for a voltage above 1500 V. The electric power, or the electric current, for example the direct current, of the vehicle electrical system 610 may be transferred at a high voltage, for example at one or more of the voltages levels mentioned above. The vehicle electrical system 610 may be configured to transfer the electric power, or the electric current, at a high voltage, for example at one or more of the voltages levels mentioned above. The vehicle electrical system 610 may be configured to transfer direct current.

With reference to Figure 15, the vehicle electrical system 610 may be electrically connected, or connectable, to the one or more electric battery cell units 100a, the electrical battery arrangement 200; 400 and/or the electric battery pack 500. The one or more electric battery cell units 100a may be one or more high voltage battery cell units 100a. It may be defined that the one or more electric battery cell units 100a, the electrical battery arrangement 200; 400 and/or the electric battery pack 500 is/are configured for high voltage, for example for one or more of the voltages levels mentioned above. The vehicle electrical system 610 may be configured to electrically connect the one or more electric battery cell units 100a, the electrical battery arrangement 200; 400 and/or the electric battery pack 500 to the powertrain 606 of the vehicle 600. The vehicle electrical system 610 may be configured to electrically connect the one or more electric battery cell units 100a, the electrical battery arrangement 200; 400 and/or the electric battery pack 500 to the one or more electric motors 602 of the vehicle 600. It may be defined that the vehicle electrical system 610 is configured to transfer the electric power, or the electric current, for example between the one or more electric motors 602 (and/or the powertrain 606) and the one or more electric battery cell units 100a, the electrical battery arrangement 200; 400 and/or the electric battery pack 500.

It is to be understood that embodiments of the electric battery cell unit 100a, the method and the electrical battery arrangement 200; 400 may be applied to configurations, structures, or apparatuses different from a vehicle 600.

The present invention is not limited to the above-described embodiments.

## Claims

1. An electric battery cell unit (100a; 100b; 100c) comprising
a stack of electrodes (106) comprising a first electrode (108) and a second electrode (110),
a first terminal (102),
a second terminal (104), and
a holder (112) for holding the stack of electrodes (106),
wherein the first terminal (102) is electrically connected to the first electrode (108),
wherein the second terminal (104) is electrically connected to the second electrode (110),
wherein the first and second terminals (102, 104) are attached to the holder (112),
wherein the first terminal (102) comprises a first interface (114) for attachment and electrical connection of the first terminal (102) to a second terminal (104) of another electric battery cell unit (100b), and
wherein the second terminal (104) comprises a second interface (116) for attachment and electrical connection of the second terminal (104) to a first terminal (102) of another electric battery cell unit (100c), and
wherein the holder (112) comprises a first end portion (118) and a second end portion (120),
wherein the first terminal (102) is located at the first end portion (118), and
wherein the second terminal (102) is located at the second end portion (120), and
wherein the holder (112) has a longitudinal extension (122) extending from the first end portion (118) to the second end portion (120) in a longitudinal direction (124), and
wherein the first interface (114) comprises one or more first contact surfaces (126) for contact with a second terminal (104) of another electric battery cell unit (100b), the one or more first contact surfaces (126) being in parallel to the longitudinal direction (124), and
wherein the second interface (116) comprises one or more second contact surfaces (128) for contact with a first terminal (102) of another electric battery cell unit (100c), the one or more second contact surfaces (128) being in parallel to the longitudinal direction (124), and **characterized in that** the one or more first contact surfaces (126) comprises/comprise two stops (130, 132) and a sloping surface (134) extending from one (130, 132) of the two stops (130, 132) of the one or more first contact surfaces (126) to the other one (130, 132) of the two stops (130, 132) of the one or more first contact surfaces (126), and
wherein the one or more second contact surfaces (128) comprises/comprise two stops (136, 138) and a sloping surface (140) extending from one (136, 138) of the two stops (136, 138) of the one or more second contact surfaces (128) to the other one (136, 138) of the two stops (136, 138) of the one or more second contact surfaces (128).

2. An electric battery cell unit (100a) according to claim 1, wherein the first interface (114) is configured for detachable attachment of the first terminal (102) to a second terminal (102) of another electric battery cell unit (100b), and
wherein the second interface (116) is configured for detachable attachment of the second terminal (104) to a first terminal (102) of another electric battery cell unit (100c).

3. An electric battery cell unit (100a) according to claim 1 or 2, wherein the first end portion (118) is opposite the second end portion (120).

4. An electric battery cell unit (100a) according to any one of the claims 1 to 3, wherein the second interface (116) is a mirrored version of the first interface (114).

5. An electric battery cell unit (100a) according to any one of the claims 1 to 4, wherein the holder (112) comprises a casing (156) for housing the stack of electrodes (106).

6. An electric battery cell unit (100a) according to any one of the claims 1 to 11, wherein the electric battery cell unit (100a) comprises
one or more first electrode tabs (158) electrically connected to the first electrode (108), and
one or more second electrode tabs (160) electrically connected to the second electrode (110),
wherein the first terminal (102) is electrically connected to the one or more first electrode tabs (158), and
wherein the second terminal (104) is electrically connected to the one or more second electrode tabs (160).

7. An electric battery cell unit (100a) according to claim 6, wherein the first terminal (102) is directly mechanically connected and directly electrically connected to the one or more first electrode tabs (158), and
wherein the second terminal (104) is directly mechanically connected and directly electrically connected to the one or more second electrode tabs (160).

8. An electric battery arrangement (200; 400) comprising a plurality of electric battery cell units (100a, 100b, 100c) according to any one of the preceding claims.

9. An electric battery arrangement (200; 400) according to claim 8, wherein the first interfaces (114) of the electric battery cell units (100a, 100b, 100c) of the plurality of electric battery cell units (100a, 100b, 100c) are equal to one another, and
wherein the second interfaces (116) of the electric battery cell units (100a, 100b, 100c) of the plurality of electric battery cell units (100a, 100b, 100c) are equal to one another.

10. An electric battery arrangement (200; 400) according to claim 8 or 9, wherein the first interface (114) of each electric battery cell unit (100a, 100b, 100c) of the plurality of electric battery cell units (100a, 100b, 100c) is complementary to the second interface (116) of another electric battery cell unit (100a, 100b, 100c) of the plurality of electric battery cell units (100a, 100b, 100c).

11. An electric battery arrangement (200; 400) according to any one of the claims 8 to 10, wherein the first interface (114) of each electric battery cell unit (100a, 100b, 100c) of the plurality of electric battery cell units (100a, 100b, 100c) is configured for non-engagement with the first interface (114) of another electric battery cell unit (100a, 100b, 100c) of the plurality of electric battery cell units (100a, 100b, 100c).

12. An electric battery arrangement (200; 400) according to any one of the claims 8 to 11, wherein the first interface (114) of each electric battery cell unit (100a, 100b, 100c) of the plurality of electric battery cell units (100a, 100b, 100c) is configured to form a scarf joint with the second interface (116) of another electric battery cell unit (100a, 100b, 100c) of the plurality of electric battery cell units (100a, 100b, 100c).

13. An electric battery arrangement (200; 400) according to any one of the claims 8 to 12, wherein the electric battery arrangement (200) comprises one or more elements (202, 206) for mounting the plurality of electric battery cell units (100a, 100b, 100c), and
wherein the first and second terminals (102, 104) are detachably attachable to the element (202, 206).

14. A method for electrically interconnecting a plurality of electric battery cell units (100a, 100b, 100c), wherein each electric battery cell unit (100a, 100b, 100c) of the plurality of electric battery cell units (100a, 100b, 100c) comprises
a stack of electrodes (106) comprising a first electrode (108) and a second electrode (110),
a first terminal (102),
a second terminal (104), and
a holder (112) for holding the stack of electrodes (106),
wherein the first terminal (102) is electrically connected to the first electrode (108),
wherein the second terminal (104) is electrically connected to the second electrode (110),
wherein the first and second terminals (102, 104) are attached to the holder (112),
wherein the first terminal (102) comprises a first interface (114) for attachment and electrical connection of the first terminal (102) to a second terminal (104) of another electric battery cell unit (100a, 100b, 100c), and
wherein the second terminal (104) comprises a second interface (116) for attachment and electrical connection of the second terminal (104) to a first terminal (102) of another electric battery cell unit (100a, 100b, 100c),
wherein the method comprises:
attaching (301) a first terminal (102) of one (100a, 100b, 100c) of the electric battery cell units (100a, 100b, 100c) of the plurality of electric battery cell units (100a, 100b, 100c) to a second terminal (104) of another one (100a, 100b, 100c) of the electric battery cell units(100a, 100b, 100c) of the plurality of electric battery cell units (100a, 100b, 100c) via the first and second interfaces (114, 116) to electrically interconnect (302) the first and second terminals (102, 104) of the two electric battery cell units (100a, 100b, 100c) of the plurality of electric battery cell units (100a, 100b, 100c), wherein the holder (112) comprises a first end portion (118) and a second end portion (120),
wherein the first terminal (102) is located at the first end portion (118), and
wherein the second terminal (102) is located at the second end portion (120), and
wherein the holder (112) has a longitudinal extension (122) extending from the first end portion (118) to the second end portion (120) in a longitudinal direction (124), and
wherein the first interface (114) comprises one or more first contact surfaces (126) for contact with a second terminal (104) of another electric battery cell unit (100b), the one or more first contact surfaces (126) being in parallel to the longitudinal direction (124), and
wherein the second interface (116) comprises one or more second contact surfaces (128) for contact with a first terminal (102) of another electric battery cell unit (100c), the one or more second contact surfaces (128) being in parallel to the longitudinal direction (124), and **characterized in that** the one or more first contact surfaces (126) comprises/comprise two stops (130, 132) and a sloping surface (134) extending from one (130, 132) of the two stops (130, 132) of the one or more first contact surfaces (126) to the other one (130, 132) of the two stops (130, 132) of the one or more first contact surfaces (126), and
wherein the one or more second contact surfaces (128) comprises/comprise two stops (136, 138) and a sloping surface (140) extending from one (136, 138) of the two stops (136, 138) of the one or more second contact surfaces (128) to the other one (136, 138) of the two stops (136, 138) of the one or more second contact surfaces (128).

15. A vehicle (600) comprising one or more of the group of:
• an electric battery cell unit (100a, 100b, 100c) according to any one of the claims 1 to 7; and
• an electric battery arrangement (200; 400) according to any one of the claims 8 to 13.

## Patentansprüche

1. Elektrische Batteriezelleneinheit (100a; 100b; 100c), umfassend
einen Elektrodenstapel (106) mit einer ersten Elektrode (108) und einer zweiten Elektrode (110),
einen ersten Anschluss (102),
einen zweiten Anschluss (104), und
einen Halter (112) zum Halten des Elektrodenstapels (106),
wobei der erste Anschluss (102) elektrisch mit der ersten Elektrode (108) verbunden ist,
wobei der zweite Anschluss (104) elektrisch mit der zweiten Elektrode (110) verbunden ist,
wobei der erste und der zweite Anschluss (102, 104) am Halter (112) befestigt sind,
wobei der erste Anschluss (102) eine erste Schnittstelle (114) zur Befestigung und elektrischen Verbindung des ersten Anschlusses (102) mit einem zweiten Anschluss (104) einer anderen elektrischen Batteriezelleneinheit (100b) umfasst, und
wobei der zweite Anschluss (104) eine zweite Schnittstelle (116) zur Befestigung und elektrischen Verbindung des zweiten Anschlusses (104) mit einem ersten Anschluss (102) einer anderen elektrischen Batteriezelleneinheit (100c) umfasst, und
wobei der Halter (112) einen ersten Endabschnitt (118) und einen zweiten Endabschnitt (120) umfasst,
wobei der erste Anschluss (102) am ersten Endabschnitt (118) angeordnet ist, und
wobei der zweite Anschluss (102) am zweiten Endabschnitt (120) angeordnet ist,
und
wobei der Halter (112) eine Längserstreckung (122) aufweist, die sich von dem ersten Endabschnitt (118) zu dem zweiten Endabschnitt (120) in einer Längsrichtung (124) erstreckt,
und
wobei die erste Schnittstelle (114) eine oder mehrere erste Kontaktflächen (126) für einen Kontakt mit einem zweiten Anschluss (104) einer anderen elektrischen Batteriezelleneinheit (100b) umfasst, wobei die eine oder mehreren ersten Kontaktflächen (126) parallel zur Längsrichtung (124) verlaufen, und
wobei die zweite Schnittstelle (116) eine oder mehrere zweite Kontaktflächen (128) für einen Kontakt mit einem ersten Anschluss (102) einer anderen elektrischen Batteriezelleneinheit (100c) umfasst, wobei die eine oder mehreren zweiten Kontaktflächen (128) parallel zur Längsrichtung (124) verlaufen, und **dadurch gekennzeichnet, dass** die eine oder die mehreren ersten Kontaktflächen (126) zwei Anschläge (130, 132) und eine schräge Fläche (134) umfasst/umfassen, die sich von einem (130, 132) der beiden Anschläge (130, 132) der einen oder der mehreren ersten Kontaktflächen (126) zu dem anderen (130, 132) der beiden Anschläge (130, 132) der einen oder der mehreren ersten Kontaktflächen (126) erstreckt, und
wobei die eine oder die mehreren zweiten Kontaktflächen (128) zwei Anschläge (136, 138) und eine schräge Fläche (140) umfasst/umfassen, die sich von einem (136, 138) der beiden Anschläge (136, 138) der einen oder der mehreren zweiten Kontaktflächen (128) zu dem anderen (136, 138) der beiden Anschläge (136, 138) der einen oder der mehreren zweiten Kontaktflächen (128) erstreckt.

2. Elektrische Batteriezelleneinheit (100a) nach Anspruch 1, wobei die erste Schnittstelle (114) zur lösbaren Befestigung des ersten Anschlusses (102) an einem zweiten Anschluss (102) einer anderen elektrischen Batteriezelleneinheit (100b) konfiguriert ist, und
wobei die zweite Schnittstelle (116) zur lösbaren Befestigung des zweiten Anschlusses (104) an einem ersten Anschluss (102) einer anderen elektrischen Batteriezelleneinheit (100c) konfiguriert ist.

3. Elektrische Batteriezelleneinheit (100a) nach Anspruch 1 oder 2, wobei der erste Endabschnitt (118) dem zweiten Endabschnitt (120) gegenüber liegt.

4. Elektrische Batteriezelleneinheit (100a) nach einem der Ansprüche 1 bis 3, wobei die zweite Schnittstelle (116) eine gespiegelte Version der ersten Schnittstelle (114) ist.

5. Elektrische Batteriezelleneinheit (100a) nach einem der Ansprüche 1 bis 4, wobei der Halter (112) ein Gehäuse (156) zur Aufnahme des Elektrodenstapels (106) umfasst.

6. Elektrische Batteriezelleneinheit (100a) nach einem der Ansprüche 1 bis 11, wobei die elektrische Batteriezelleneinheit (100a) umfasst
eine oder mehrere erste Elektrodenzungen (158), die elektrisch mit der ersten Elektrode (108) verbunden sind, und
eine oder mehrere zweite Elektrodenzungen (160), die elektrisch mit der zweiten Elektrode (110) verbunden sind,
wobei der erste Anschluss (102) elektrisch mit der einen oder den mehreren ersten Elektrodenzungen (158) verbunden ist, und
wobei der zweite Anschluss (104) elektrisch mit der einen oder den mehreren zweiten Elektrodenzungen (160) verbunden ist.

7. Elektrische Batteriezelleneinheit (100a) nach Anspruch 6, wobei der erste Anschluss (102) direkt mechanisch und direkt elektrisch mit der einen oder den mehreren ersten Elektrodenzungen (158) verbunden ist, und
wobei der zweite Anschluss (104) direkt mechanisch und direkt elektrisch mit der einen oder den mehreren zweiten Elektrodenzungen (160) verbunden ist.

8. Elektrische Batterieanordnung (200; 400) mit einer Mehrzahl von elektrischen Batteriezelleneinheiten (100a, 100b, 100c) nach einem der vorhergehenden Ansprüche.

9. Elektrische Batterieanordnung (200; 400) nach Anspruch 8, wobei die ersten Schnittstellen (114) der elektrischen Batteriezelleneinheiten (100a, 100b, 100c) der Mehrzahl von elektrischen Batteriezelleneinheiten (100a, 100b, 100c) einander gleich sind, und
wobei die zweiten Schnittstellen (116) der elektrischen Batteriezelleneinheiten (100a, 100b, 100c) der Mehrzahl von elektrischen Batteriezelleneinheiten (100a, 100b, 100c) einander gleich sind.

10. Elektrische Batterieanordnung (200; 400) nach Anspruch 8 oder 9, wobei die erste Schnittstelle (114) jeder elektrischen Batteriezelleneinheit (100a, 100b, 100c) der Mehrzahl von elektrischen Batteriezelleneinheiten (100a, 100b, 100c) komplementär zu der zweiten Schnittstelle (116) einer anderen elektrischen Batteriezelleneinheit (100a, 100b, 100c) der Mehrzahl von elektrischen Batteriezelleneinheiten (100a, 100b, 100c) ist.

11. Elektrische Batterieanordnung (200; 400) nach einem der Ansprüche 8 bis 10, wobei die erste Schnittstelle (114) jeder elektrischen Batteriezelleneinheit (100a, 100b, 100c) der Mehrzahl von elektrischen Batteriezelleneinheiten (100a, 100b, 100c) so konfiguriert ist, dass sie nicht mit der ersten Schnittstelle (114) einer anderen elektrischen Batteriezelleneinheit (100a, 100b, 100c) der Mehrzahl von elektrischen Batteriezelleneinheiten (100a, 100b, 100c) in Eingriff steht.

12. Elektrische Batterieanordnung (200; 400) nach einem der Ansprüche 8 bis 11, wobei die erste Schnittstelle (114) jeder elektrischen Batteriezelleneinheit (100a, 100b, 100c) der Mehrzahl von elektrischen Batteriezelleneinheiten (100a, 100b, 100c) so konfiguriert ist, dass sie eine Flächennahtverbindung mit der zweiten Schnittstelle (116) einer anderen elektrischen Batteriezelleneinheit (100a, 100b, 100c) der Mehrzahl von elektrischen Batteriezelleneinheiten (100a, 100b, 100c) bildet.

13. Elektrische Batterieanordnung (200; 400) nach einem der Ansprüche 8 bis 12, wobei die elektrische Batterieanordnung (200) ein oder mehrere Elemente (202, 206) zur Befestigung der Mehrzahl von elektrischen Batteriezelleneinheiten (100a, 100b, 100c) umfasst, und
wobei der erste und der zweite Anschluss (102, 104) abnehmbar an dem Element (202, 206) angebracht werden können.

14. Verfahren zum elektrischen Verbinden einer Mehrzahl von elektrischen Batteriezelleneinheiten (100a, 100b, 100c), wobei jede elektrische Batteriezelleneinheit (100a, 100b, 100c) der Mehrzahl von elektrischen Batteriezelleneinheiten (100a, 100b, 100c) umfasst
einen Elektrodenstapel (106) mit einer ersten Elektrode (108) und einer zweiten Elektrode (110),
einen ersten Anschluss (102),
einen zweiten Anschluss (104), und
einen Halter (112) zum Halten des Elektrodenstapels (106),
wobei der erste Anschluss (102) elektrisch mit der ersten Elektrode (108) verbunden ist,
wobei der zweite Anschluss (104) elektrisch mit der zweiten Elektrode (110) verbunden ist,
wobei der erste und der zweite Anschluss (102, 104) am Halter (112) befestigt sind,
wobei der erste Anschluss (102) eine erste Schnittstelle (114) zur Befestigung und elektrischen Verbindung des ersten Anschlusses (102) mit einem zweiten Anschluss (104) einer anderen elektrischen Batteriezelleneinheit (100a, 100b, 100c) umfasst, und
wobei der zweite Anschluss (104) eine zweite Schnittstelle (116) zur Befestigung und elektrischen Verbindung des zweiten Anschlusses (104) mit einem ersten Anschluss (102) einer anderen elektrischen Batteriezelleneinheit (100a, 100b, 100c) umfasst,
wobei das Verfahren umfasst:
Anbringen (301) eines ersten Anschlusses (102) einer (100a, 100b, 100c) der elektrischen Batteriezelleneinheiten (100a, 100b, 100c) der Mehrzahl von elektrischen Batteriezelleneinheiten (100a, 100b, 100c) an einem zweiten Anschluss (104) einer anderen (100a, 100b, 100c) der elektrischen Batteriezelleneinheiten (100a, 100b, 100c) der Mehrzahl von elektrischen Batteriezelleneinheiten (100a, 100b, 100c) über die erste und zweite Schnittstelle (114, 116), um die ersten und zweiten Anschlüsse (102, 104) der beiden elektrischen Batteriezelleneinheiten (100a, 100b, 100c) der Mehrzahl von elektrischen Batteriezelleneinheiten (100a, 100b, 100c) elektrisch miteinander zu verbinden (302), wobei der Halter (112) einen ersten Endabschnitt (118) und einen zweiten Endabschnitt (120) umfasst,
wobei der erste Anschluss (102) an dem ersten Endabschnitt (118) angeordnet ist, und
wobei der zweite Anschluss (102) an dem zweiten Endabschnitt (120) angeordnet ist, und
wobei der Halter (112) eine Längserstreckung (122) aufweist, die sich von dem ersten Endabschnitt (118) zu dem zweiten Endabschnitt (120) in einer Längsrichtung (124) erstreckt, und
wobei die erste Schnittstelle (114) eine oder mehrere erste Kontaktflächen (126) für einen Kontakt mit einem zweiten Anschluss (104) einer anderen elektrischen Batteriezelleneinheit (100b) umfasst, wobei die eine oder mehreren ersten Kontaktflächen (126) parallel zur Längsrichtung (124) verlaufen, und
wobei die zweite Schnittstelle (116) eine oder mehrere zweite Kontaktflächen (128) für einen Kontakt mit einem ersten Anschluss (102) einer anderen elektrischen Batteriezelleneinheit (100c) umfasst, wobei die eine oder mehreren zweiten Kontaktflächen (128) parallel zur Längsrichtung (124) verlaufen, und **dadurch gekennzeichnet, dass** die eine oder die mehreren ersten Kontaktflächen (126) zwei Anschläge (130, 132) und eine schräge Fläche (134) umfasst/umfassen, die sich von einem (130, 132) der beiden Anschläge (130, 132) der einen oder der mehreren ersten Kontaktflächen (126) zu dem anderen (130, 132) der beiden Anschläge (130, 132) der einen oder der mehreren ersten Kontaktflächen (126) erstreckt, und
wobei die eine oder mehrere zweite Kontaktfläche(n) (128) umfasst/umfassen zwei Anschläge (136, 138) und eine schräge Fläche (140), die sich von einem (136, 138) der beiden Anschläge (136, 138) der einen oder mehreren zweiten Kontaktflächen (128) zu dem anderen (136, 138) der beiden Anschläge (136, 138) der einen oder mehreren zweiten Kontaktflächen (128) erstreckt.

15. Fahrzeug (600) mit einer oder mehreren der folgenden Gruppen:
• eine elektrische Batteriezelleneinheit (100a, 100b, 100c) nach einem der Ansprüche 1 bis 7; und
• eine elektrische Batterieanordnung (200; 400) nach einem der Ansprüche 8 bis 13.

## Revendications

1. Unité d'élément de batterie électrique (100a ; 100b ; 100c) comprenant
un empilement d'électrodes (106) comprenant une première électrode (108) et une deuxième électrode (110),
une première borne (102),
une deuxième borne (104), et
un support (112) pour supporter l'empilement d'électrodes (106),
dans laquelle la première borne (102) est connectée électriquement à la première électrode (108),
dans laquelle la deuxième borne (104) est connectée électriquement à la deuxième électrode (110),
dans laquelle les première et deuxième bornes (102, 104) sont fixées au support (112),
dans laquelle la première borne (102) comprend une première interface (114) pour la fixation et la connexion électrique de la première borne (102) à une deuxième borne (104) d'une autre unité d'élément de batterie électrique (100b), et
dans laquelle la deuxième borne (104) comprend une deuxième interface (116) pour la fixation et la connexion électrique de la deuxième borne (104) à une première borne (102) d'une autre unité d'élément de batterie électrique (100c), et
dans laquelle le support (112) comprend une première portion d'extrémité (118) et une deuxième portion d'extrémité (120),
dans laquelle la première borne (102) est située au niveau de la première portion d'extrémité (118), et
dans laquelle la deuxième borne (102) est située au niveau de la deuxième portion d'extrémité (120), et
dans laquelle le support (112) a une extension longitudinale (122) s'étendant de la première portion d'extrémité (118) à la deuxième portion d'extrémité (120) dans une direction longitudinale (124), et
dans laquelle la première interface (114) comprend une ou plusieurs premières surfaces de contact (126) pour un contact avec une deuxième borne (104) d'une autre unité d'élément de batterie électrique (100b), les une ou plusieurs premières surfaces de contact (126) étant parallèles à la direction longitudinale (124), et
dans laquelle la deuxième interface (116) comprend une ou plusieurs deuxièmes surfaces de contact (128) pour un contact avec une première borne (102) d'une autre unité d'élément de batterie électrique (100c), les une ou plusieurs deuxièmes surfaces de contact (128) étant parallèles à la direction longitudinale (124), et **caractérisée en ce que** les une ou plusieurs premières surfaces de contact (126) comprend/comprennent deux butées (130, 132) et une surface inclinée (134) s'étendant depuis l'une (130, 132) des deux butées (130, 132) parmi les un ou plusieurs premières surfaces de contact (126) jusqu'à l'autre (130, 132) des deux butées (130, 132) des une ou plusieurs premières surfaces de contact (126), et
dans laquelle les une ou plusieurs deuxièmes surfaces de contact (128) comprend/comprennent deux butées (136, 138) et une surface inclinée (140) s'étendant depuis l'une (136, 138) des deux butées (136, 138) parmi les une ou plusieurs deuxièmes surfaces de contact (128) jusqu'à l'autre (136, 138) des deux butées (136, 138) parmi les une ou plusieurs deuxièmes surfaces de contact (128).

2. Unité d'élément de batterie électrique (100a) selon la revendication 1, dans laquelle la première interface (114) est configurée pour une fixation détachable de la première borne (102) à une deuxième borne (102) d'une autre unité d'élément de batterie électrique (100b), et
dans laquelle la deuxième interface (116) est configurée pour la fixation détachable de la deuxième borne (104) à une première borne (102) d'une autre unité d'élément de batterie électrique (100c).

3. Unité d'élément de batterie électrique (100a) selon la revendication 1 ou 2, dans laquelle la première portion d'extrémité (118) est opposée à la deuxième portion d'extrémité (120).

4. Unité d'élément de batterie électrique (100a) selon l'une quelconque des revendications 1 à 3, dans laquelle la deuxième interface (116) est une version miroir de la première interface (114) .

5. Unité d'élément de batterie électrique (100a) selon l'une quelconque des revendications 1 à 4, dans laquelle le support (112) comprend un boîtier (156) pour loger l'empilement d'électrodes (106) .

6. Unité d'élément de batterie électrique (100a) selon l'une quelconque des revendications 1 à 11, dans laquelle l'unité d'élément de batterie électrique (100a) comprend
une ou plusieurs premières pattes d'électrode (158) connectées électriquement à la première électrode (108), et
une ou plusieurs deuxièmes pattes d'électrode (160) connectées électriquement à la deuxième électrode (110),
dans laquelle la première borne (102) est connectée électriquement aux une ou plusieurs premières pattes d'électrode (158), et
dans laquelle la deuxième borne (104) est connectée électriquement aux une ou plusieurs deuxièmes languettes d'électrode (160).

7. Unité d'élément de batterie électrique (100a) selon la revendication 6, dans laquelle la première borne (102) est directement connectée mécaniquement et directement connectée électriquement aux une ou plusieurs premières pattes d'électrode (158), et
dans laquelle la deuxième borne (104) est directement connectée mécaniquement et directement connectée électriquement aux une ou plusieurs deuxièmes languettes d'électrode (160).

8. Agencement de batterie électrique (200 ; 400) comprenant une pluralité d'unités d'élément de batterie électrique (100a, 100b, 100c) selon l'une quelconque des revendications précédentes.

9. Agencement de batterie électrique (200 ; 400) selon la revendication 8, dans lequel les premières interfaces (114) des unités d'élément de batterie électrique (100a, 100b, 100c) de la pluralité d'unités d'élément de batterie électrique (100a, 100b, 100c) sont égales les unes aux autres, et
dans lequel les deuxièmes interfaces (116) des unités d'élément de batterie électrique (100a, 100b, 100c) de la pluralité d'unités d'élément de batterie électrique (100a, 100b, 100c) sont égales les unes aux autres.

10. Agencement de batterie électrique (200 ; 400) selon la revendication 8 ou 9, dans lequel la première interface (114) de chaque unité d'élément de batterie électrique (100a, 100b, 100c) de la pluralité d'unités d'élément de batterie électrique (100a, 100b, 100c) est complémentaire de la deuxième interface (116) d'une autre unité d'élément de batterie électrique (100a, 100b, 100c) de la pluralité d'unités d'élément de batterie électrique (100a, 100b, 100c).

11. Agencement de batterie électrique (200 ; 400) selon l'une quelconque des revendications 8 à 10, dans lequel la première interface (114) de chaque unité d'élément de batterie électrique (100a, 100b, 100c) de la pluralité d'unités d'élément de batterie électrique (100a, 100b, 100c) est configurée pour ne pas venir en prise avec la première interface (114) d'une autre unité d'élément de batterie électrique (100a, 100b, 100c) de la pluralité d'unités d'élément de batterie électrique (100a, 100b, 100c).

12. Agencement de batterie électrique (200 ; 400) selon l'une quelconque des revendications 8 à 11, dans lequel la première interface (114) de chaque unité d'élément de batterie électrique (100a, 100b, 100c) de la pluralité d'unités d'élément de batterie électrique (100a, 100b, 100c) est configurée pour former un joint en biseau avec la deuxième interface (116) d'une autre unité d'élément de batterie électrique (100a, 100b, 100c) de la pluralité d'unités d'élément de batterie électrique (100a, 100b, 100c).

13. Agencement de batterie électrique (200 ; 400) selon l'une quelconque des revendications 8 à 12, dans lequel l'agencement de batterie électrique (200) comprend un ou plusieurs éléments (202, 206) pour monter la pluralité d'unités d'élément de batterie électrique (100a, 100b, 100c), et
dans lequel les première et deuxième bornes (102, 104) peuvent être fixées de manière détachable à l'élément (202, 206).

14. Procédé d'interconnexion électrique d'une pluralité d'unités d'élément de batterie électrique (100a, 100b, 100c), dans lequel chaque unité d'élément de batterie électrique (100a, 100b, 100c) de la pluralité d'unités d'élément de batterie électrique (100a, 100b, 100c) comprend
un empilement d'électrodes (106) comprenant une première électrode (108) et une deuxième électrode (110),
une première borne (102),
une deuxième borne (104), et
un support (112) pour supporter l'empilement d'électrodes (106),
dans lequel la première borne (102) est connectée électriquement à la première électrode (108),
dans lequel la deuxième borne (104) est connectée électriquement à la deuxième électrode (110),
dans lequel les première et deuxième bornes (102, 104) sont fixées au support (112),
dans lequel la première borne (102) comprend une première interface (114) pour la fixation et la connexion électrique de la première borne (102) à une deuxième borne (104) d'une autre unité d'élément de batterie électrique (100a, 100b, 100c), et
dans lequel la deuxième borne (104) comprend une deuxième interface (116) pour la fixation et la connexion électrique de la deuxième borne (104) à une première borne (102) d'une autre unité d'élément de batterie électrique (100a, 100b, 100c),
dans lequel le procédé comprend :
la fixation (301) d'une première borne (102) de l'une (100a, 100b, 100c) des unités d'élément de batterie électrique (100a, 100b, 100c) parmi la pluralité d'unités d'élément de batterie électrique (100a, 100b, 100c) à une deuxième borne (104) d'une autre (100a, 100b, 100c) des unités d'élément de batterie électrique (100a, 100b, 100c) parmi la pluralité d'unités d'élément de batterie électrique (100a, 100b, 100c) par l'intermédiaire des première et deuxième interfaces (114, 116) pour interconnecter électriquement (302) les première et deuxième bornes (102, 104) des deux unités d'élément de batterie électrique (100a, 100b, 100c) de la pluralité d'unités d'élément de batterie électrique (100a, 100b, 100c), dans lequel le support (112) comprend une première portion d'extrémité (118) et une deuxième portion d'extrémité (120),
dans lequel la première borne (102) est située au niveau de la première portion d'extrémité (118), et
dans lequel la deuxième borne (102) est située au niveau de la deuxième portion d'extrémité (120), et
dans lequel le support (112) a une extension longitudinale (122) s'étendant de la première portion d'extrémité (118) à la deuxième portion d'extrémité (120) dans une direction longitudinale (124), et
dans lequel la première interface (114) comprend une ou plusieurs premières surfaces de contact (126) pour un contact avec une deuxième borne (104) d'une autre unité d'élément de batterie électrique (100b), les une ou plusieurs premières surfaces de contact (126) étant parallèles à la direction longitudinale (124), et
dans lequel la deuxième interface (116) comprend une ou plusieurs deuxièmes surfaces de contact (128) pour un contact avec une première borne (102) d'une autre unité d'élément de batterie électrique (100c), les une ou plusieurs deuxièmes surfaces de contact (128) étant parallèles à la direction longitudinale (124), et **caractérisé en ce que** les une ou plusieurs premières surfaces de contact (126) comprend/comprennent deux butées (130, 132) et une surface inclinée (134) s'étendant depuis l'une (130, 132) des deux butées (130, 132) parmi les un ou plusieurs premières surfaces de contact (126) jusqu'à l'autre (130, 132) des deux butées (130, 132) des une ou plusieurs premières surfaces de contact (126), et dans lequel les une ou plusieurs deuxièmes surfaces de contact (128) comprend/comprennent deux butées (136, 138) et une surface inclinée (140) s'étendant depuis l'une (136, 138) des deux butées (136, 138) parmi les une ou plusieurs deuxièmes surfaces de contact (128) jusqu'à l'autre (136, 138) des deux butées (136, 138) parmi les une ou plusieurs deuxièmes surfaces de contact (128).

15. Véhicule (600) comprenant un ou plusieurs parmi le groupe constitué :
• d'une unité d'élément de batterie électrique (100a, 100b, 100c) selon l'une quelconque des revendications 1 à 7 ; et
• d'un agencement de batterie électrique (200 ; 400) selon l'une quelconque des revendications 8 à 13.
